Europäisches Patentamt

(19) European Patent Office

Office européen des brevets

(11) Publication number:

**0 054 265**
**B1**

## (12) EUROPEAN PATENT SPECIFICATION

(45) Date of publication of patent specification: **12.03.86**

(21) Application number: **81110319.1**

(22) Date of filing: **10.12.81**

(51) Int. Cl.⁴: **H 02 B 1/08**

(54) **Switchboard frame.**

(30) Priority: **12.12.80 JP 174527/80**

(43) Date of publication of application:
**23.06.82 Bulletin 82/25**

(45) Publication of the grant of the patent:
**12.03.86 Bulletin 86/11**

(84) Designated Contracting States:
**DE FR GB**

(56) References cited:
**DE-A-1 654 571**
**DE-A-1 938 879**
**DE-A-2 911 009**

(73) Proprietor: **Hitachi, Ltd.**
**5-1, Marunouchi 1-chome**
**Chiyoda-ku Tokyo 100 (JP)**

(72) Inventor: **Kuroda, Choji**
**14-5, Jonancho-5-chome**
**Hitachi-shi (JP)**

(74) Representative: **Finck, Dieter et al**
**Patentanwälte v. Füner, Ebbinghaus, Finck**
**Mariahilfplatz 2 & 3**
**D-8000 München 90 (DE)**

Courier Press, Leamington Spa, England.

## Description

The invention relates to a switchboard frame comprising a top wall having a member projecting at a right angle therefrom and from the periphery thereof towards the interior of the frame, a bottom wall having a member projecting at a right angle therefrom and from the periphery thereof towards the interior of the frame, a side wall having face plates projecting at a right angle therefrom and from the side edges thereof towards the interior of the frame, and two side surface pillars.

Such switchboard frames are for indoor use and formed mainly of sheet steel.

Generally, in this type of metal enclosed switch board, a switchboard frame having an inlet and outlet portion has its interior divided by a partition plate into a chamber for housing for electrical equipment, such as a circuit breaker, on the side of the inlet and outlet portion and a bus bar chamber on a side opposite the inlet and outlet portion with respect to the circuit breaker chamber. The partition plate is provided with electrical connections for connecting the circuit breaker chamber to the bus bar chamber. The electrical connection on the bus bar chamber side connects power source bus bars to a load conductor, and the electrical connection on the circuit breaker chamber side is brought into and out of contact with a circuit breaker moved into and out of the circuit breaker chamber to electrically form or close an electric circuit.

A switchboard frame for housing electrical equipment, such as power source bus bars and a circuit breaker, has hitherto been fabricated by welding thin sheet steel to a shaped steel frame structure provided by welding channel steel or angle steel to a vertical frame, a width frame and a transverse frame. Some disadvantages are associated with the shaped steel frame structure. It is time consuming and requires a lot of labor to punch holes in shaped steel and sheet steel or to form grooves therein. In addition, the shaped steel frame structure has a very heavy weight.

Instead of welding special parts for connecting the frames in the corner sections are used (DE—A—1 938 879) which are complex in shape and difficult in manufacturing.

An increase in mechanical strength achieved by sheet steel of improved quality obtained in recent years has been combined with advances in the progress of technology, such as press technology and welding technology, to make it possible to adopt what is generally referred to as a stressed shell structure in which an upper plate, such as a top wall, and a lower plate, such as a bottom wall, which are formed of sheet steel are connected to the upper end and the lower end respectively of a framework formed by bending sheet steel alone. The stressed shell structure offers advantages in that material cost and the working time can be reduced, and the weight of the framework can also be reduced. However, some disadvantages are associated with this structure. When the upper plate and the lower plate are connected to connecting pieces provided to the framework, difficulties are experienced in achieving positioning of the upper plate and the lower plate with respect to the connecting pieces because they tend to be offset relative to each other. As a result, operation of assembling a switch board frame of the stressed shell structure has been low in efficiency.

Accordingly the invention has as its object the provision of a switchboard frame enabling positioning of parts to be readily and positively achieved, to thereby increase the efficiency with which assembling operation is carried out.

The aforesaid object of the invention is realized with the switchboard frame of the described type in that said side wall has cut out grooves and connecting members on the top and bottom end portions of the face plates and also intermediate connecting members and intermediate grooves on its top and bottom edges, the connecting members interconnecting with the adjacent projecting members of the top and bottom walls.

Since the frame has two specific compositions, i.e. the grooves and connecting members, the work forming the offset portion for making the connecting member is easily done by one mechanical press and the assembling work of the frame is also easily and rapidly done.

Advantageously each of said projecting members comprises a set of members which are perpendicular to each other to provide right angle corner portions on the top and bottom walls.

It is convenient that said connecting members are spaced apart from the surface of the side wall the width of the groove which the project member engage with the grooves and said connecting members have offset portions which the project member are in engagement with the connecting members.

Side surface pillars in the form of a letter L in cross section may be positioned in the front and rear corner portions opposite the face wall formed on opposite ends of the said side wall, and connecting pieces may be formed at the lower and upper end portions of the side surface pillars through offset portions so that said connecting pieces are connected to the projecting members formed at the outer peripheries of said top wall and said bottom wall.

A further embodiment is obtained either by making holes on said face plates for fitting a door on the front surface of said switchboard frame and a backing plate on the opposite surface to said door or by making holes on the surfaces of said side surface pillars for connecting a plurality of said switchboard frames of for fitting a cover plate on the opposite surface to the side wall.

Also an intermediate support can be provided including a partition plate and a frame member located substantially midway between said side surface pillars.

According to another embodiment of the invention said connecting members are connected to said projecting members and secured in place by resistance welding.

The invention is further explained with relation to drawings.

Fig. 1 shows an example of a switchboard of the present invention;

Fig. 2 is a perspective view of the switchboard frame of the present invention;

Fig. 3 is an exploded view of part of the switchboard frame shown in Fig. 2;

Fig. 4 is a fragmentary view of the side wall;

Fig. 5(A) is a fragmentary exploded view of the frame before welding;

Fig. 5(B) is a fragmentary view of the frame after welding and

Fig. 6 shows an intermediate partition portion of the frame of Fig. 2.

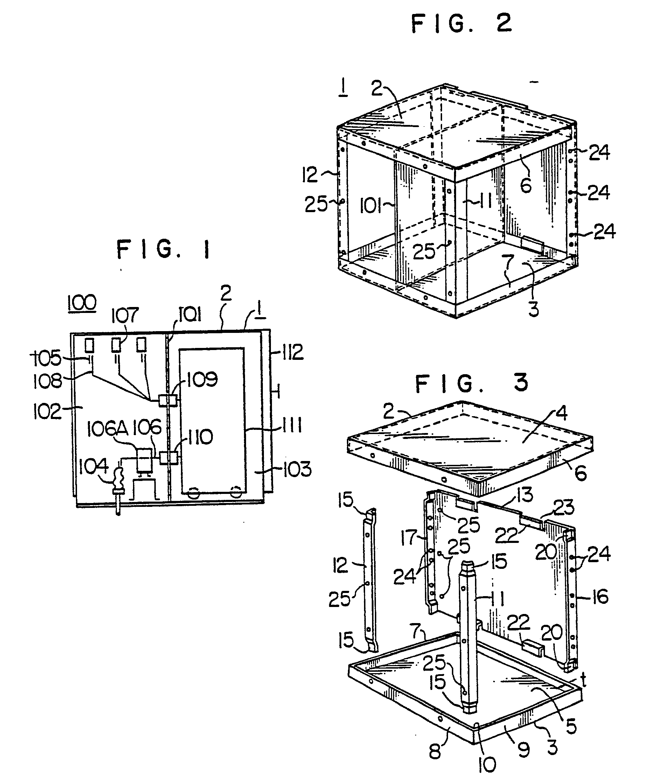

Referring to Fig. 1, there is shown a metal enclosed switchboard 100 in which the present invention can have application. A switchboard frame 1 has its interior divided into a bus bar chamber 102 and an electricity chamber 103 by a partition plate 101 mounted therein. The bus bar chamber 102 contains three phase power cable 104 and power source bus bars 105. The power cable 104 is connected at one end thereof to a load, such as a motor, not shown, and at the other end thereof through current transfer 106A to load side branch conductor 106. The power source bus bars 105 are supported by support insulators 107 attached to the surface of the ceiling and connected to power source side branch conductors 108. The power source side branch conductors 108 are connected to upper disconnecting parts 109, and the load side branch conductor 106 is connected to lower disconnecting parts 110. The upper and lower disconnecting parts 109 and 110 are mounted on the partition plate 101 and connected to a circuit breaker 111 located in the electricity chamber 103, which is adapted to open and close a door 112 on the front surface of the switchboard frame 1 and move into and out of the electricity chamber 103 into and out of electrical contact with the upper and lower disconnecting parts 109 and 110. The switchboard frame 1 in which a circuit breaker, transformer or other electrical equipment is enclosed is constructed as presently to be described.

The switchboard frame 1 comprises a top wall 2 and a bottom wall 3 having opposed surfaces 4 and 5 respectively. Projecting members 6 extend from the periphery of one opposed surface 4 towards the other surface 5 and projecting members 7 extends from the periphery of the other surface 5 toward the one surface 4. The projecting members 6 and 7 each include one set of projecting members 8 and the other set of projecting members 9, the projecting member 8 of one set of the projecting member 9 of the other set forming a corner section 10 at which they are at a right angle to each other. In the corner sections 10, a front side surface pillar 11 and a rear side surface pillar 12 in the form of a letter L in cross section are connected to side wall 13. The side surface pillars 11 and 12 are formed by bending sheet steel inwardly at upper and lower end portions into an L-shape or an inverted L-shape and have formed, at the upper and lower end portions, connecting pieces 15 through offset portions 14 inclined inwardly. The connecting portions are formed by compressing and shaping the sheet steel.

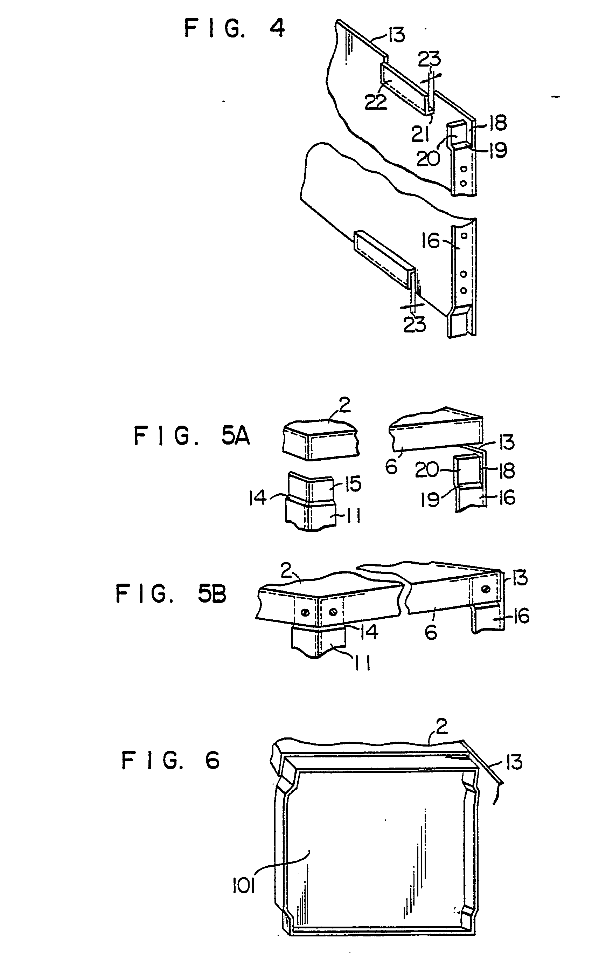

As shown in Fig. 3, each side wall 13 is bent at opposite end portions at a right angle or in a direction to the side surface pillars 11 and 12 to form front and rear face plates 16 and 17. The face plates 16 and 17 associated with side wall 13 are formed in one portion of opposite ends with cutout grooves 18 (see Fig. 4), and connecting members 20 are formed through inwardly inclined offset portions 19 at opposite end portions of the face plates 16 and 17 in positions adjacent to the cutout grooves 18. The connecting members 20 connect the projecting members 6 and 7 together. The cutout grooves 18 are dimensioned such that they accommodate the projecting members 6 and 7 in a thicknesswise direction. The portions 14 and 19 are inclined inwardly in such a manner that when the connecting members 15 and 20 connect the projecting members 6 and 7 together, the surfaces of the projecting members 6 and 7 agree with the main surfaces of the face plates 16 and 17. Stated differently, the offset portions have only to have a depthwise dimension which is equal to the widthwise dimension of the projecting members. Side plate 13 is formed with cutouts in the top and bottom edges with contacting surfaces 21 extending perpendicularly to the plane of the side wall 13 and intermediate connecting members 22 extending toward the top wall 2 from the contacting surfaces 21. The contacting members 22 are spaced apart from the surface of the side wall 13 a distance of intermediate grooves 23, by the depth of the projecting members 6 and 7. The offset portions 14 and 19 need not be inclined as described hereinabove but may extend in a perpendicular direction in the same manner as the contacting surfaces 21 of the intermediate connecting members 22.

To connect the side wall 13 to the top wall 2 and the bottom wall 3 in the switching board frame 1 of the aforesaid construction, the projecting members 6, 7 are inserted in the cutout grooves 18 and the grooves 23 between the intermediate connecting members 22 and the side wall 13 while the side walls 13 are placed on the surface of the floor, and the top wall 2 and the bottom wall 3 are pressed toward the side walls 13 while the projecting members 6, 7 are in engagement with the connecting members 20. Since the engaging force is accommodated by the cutout groove ends, the ends of the groove between the intermediate connecting members 22 and the side walls 13 and the offset portions 19, positioning of the top wall 2 and the bottom wall 3 relative to the side walls 13 can be facilitated. For example, the projecting members 6, 7 and the connecting members 20 are in engagement with each other, so that they are difficultly displaced from each other. Thus the connections between the connecting members 20 and the projecting members 6, 7 can be readily joined by resistance welding and the welds formed have high mechanical strength. Alternatively, the connecting members, intermediate connecting members and projecting members may be joined by welding while the projecting members have the side plates placed thereon in upstanding position.

Meanwhile the presence of the cutout grooves 18 facilitates bending of sheet steel of large widthwise and height dimensions for producing the side walls 13. At the same time, the cutout grooves 18 serve as a mark for performing bending operation. This also applies to the bending of sheet steel for forming the offset portions 19 and connecting members 20.

Fig. 6 shows a construction in which an intermediate support 101 including a partition plate and a frame-like member is mounted between the side wall 13 and the top wall 2 and bottom wall 3. This construction offers the advantage that the mechanical strength of the side wall and top wall can be increased with simple means.

In the metal enclosed switchboard system, a plurality of switchboard frames are sometimes connected in a body. In this case, the adjacent switchboard frames are arranged such that the side wall of one switchboard frame is disposed in contact relationship with the surface of the side surface pillars 11, 12 opposite to the side wall of the other switchboard frame.

When a plurality of switchboard frames are connected in a body, it is possible to secure the parts solidly without any gaps if the side surface pillars 11 and 12 are bolted through holes 25 formed in the connecting surfaces of the side surface pillars 11 and 12 by using bolts and nuts.

When the switchboard is assembled by using the frame of the present invention, the door 111 and backing plate are fitted on the surfaces of the face plates 16, 17 and side surface pillars 11, 12 by using bolts through holes 24 and a cover plate is fitted by using bolts through holes 25 on the surfaces of the side surface pillars 11, 12 which is not fitted with side walls 13.

The provision of the cutout grooves 18 on the surface pillars 11, 12 of the side wall 13 facilitates the assembling of the top wall 2, side wall 13 and bottom wall 3 because their positioning can be facilitated.

**Claims**

1. A switchboard frame (1) comprising a top wall (2) having a member (6) projecting at a right angle therefrom and from the periphery thereof towards the interior of the frame, a bottom wall (3) having a member (7) projecting at a right angle therefrom and from the periphery thereof towards the interior of the frame, a side wall (13) having face plates (16, 17) projecting at a right angle therefrom and from the side edges thereof towards the interior of the frame, and two side surface pillars (11, 12), characterized in that said side wall (13) has cut out grooves (18) and connecting members (20) on the top and bottom end portions of the face plates (16, 17) and also intermediate connecting members (22) and intermediate grooves (23) on its top and bottom edges, the connecting members (20, 22) interconnecting with the adjacent projecting members (6, 7) of the top and bottom walls.

2. A switchboard frame as claimed in claim 1, characterized in that said projecting members (6, 7) each comprise a set of members (8, 9) which are perpendicular to each other to provide right angle corner portions (10) on the top and bottom walls.

3. A switchboard frame as claimed in claim 1, characterized in that connecting members (22) are spaced apart from the surface of the side wall (13) by the width of the groove (23) and the projecting members (6, 7) engage with the grooves (23) and said connecting members (20) have offset portions (19) by which the projecting members (6, 7) are in engagement with the connecting members (20).

4. A switchboard frame as claimed in any one of claim 1 to 3, characterized by side surface pillars (11, 12) in the form of a letter L in cross section positioned in the front and rear corner portions (10) opposite the face wall (16, 17) formed on opposite ends of the said one side wall (13), and connecting pieces (15) formed at the lower and upper end portions of the side surface pillars (11, 12) through offset portions (14) so that said connecting pieces (15) are connected to the projecting members (8, 9) formed at the outer peripheries of said top wall (2) and said bottom wall (3).

5. A switchboard frame as claimed in claim 4, characterized by holes (24) on said face plates (16, 17) for fitting a door (112) on the front surface of said switchboard frame and a backing plate on the opposite surface to said door (112).

6. A switchboard frame as claimed in claim 4, characterized by holes (25) on the surfaces of said side surface pillars (11, 12) for connecting a plurality of said switchboard frames of for fitting a cover plate on the opposite surface to the side wall (13).

7. A switchboard frame as claimed in any one of claims 1 to 6, characterized by an intermediate support (101) including a partition plate and a frame member located substantially midway between said side surface pillars (11, 12).

8. A switchboard frame as claimed in any one of claims 1 to 7, characterized in that said connecting members (20) are connected to said projecting members (8, 9) and secured in place by resistance welding.

**Patentansprüche**

1. Schaltanlagegerüst (1) mit einer oberen Wand (2), die ein Element (6) aufweist, das rechtwinklig davon und vom Umfang zum Inneren des Gerüsts vorsteht, mit einer Bodenwand (3), die ein Element (7) aufweist, das rechtwinklig davon und vom Umfang zum Inneren des Gerüsts vorsteht, mit einer Seitenwand (13), die Stirnplatten (16, 17) aufweist, die rechtwinklig davon und von den Seitenrändern zum Inneren des Gerüsts vorstehen, und mit zwei Seitenflächensäulen (11, 12), dadurch gekennzeichnet, daß die Seitenwand (13) ausgesparte Nuten (18) und Verbindungselemente (20) an den oberen und unteren Stirnabschnitten der Stirnplatten (16, 17) und weiterhin Zwischenverbindungselemente (22) und Zwischennuten (23) an ihren oberen und unteren Rändern aufweist, wobei die Verbindungselemente (20, 22) in Zwischenverbindung mit den angrenzenden vorstehenden Elementen (6, 7) der oberen und unteren Wand stehen.

2. Schaltanlagegerüst nach Anspruch 1, dadurch gekennzeichnet, daß die vorstehenden Element (6, 7) jeweils einen Satz von Teilen (8, 9) aufweisen, die senkrecht zueinander sind und rechtwinklige Eckabschnitte (10) an der oberen und unteren Wand bilden.

3. Schaltanlagegerüst nach Anspruch 1, dadurch gekennzeichnet, daß die Verbindungselemente (22) von der Oberfläche der Seitenwand (13) um die Breite der Nut (23) entfernt sind, daß die vorstehenden Elemente (6, 7) in die Nuten (23) eingreifen, und daß die Verbindungselemente (20) abgesetzte Abschnitte (19) aufweisen, mit denen die vorstehenden Elemente (6, 7) in Eingriff mit den Verbindungselementen (20) stehen.

4. Schaltanlagegerüst nach einem der Ansprüche 1 bis 3, gekennzeichnet durch Seitenflächensäulen (11,12) mit einem L-förmigen Querschnitt, die in den vorderen und hinteren Eckabschnitten (10) gegenüber der Stirnwand (16, 17) positioniert sind, welche an den gegenüberliegenden Enden der einen Seitenwand (13) ausgebildet sind, und durch Verbindungsstücke (15), die an den unteren und oberen Stirnabschnitten der Seitenflächensäulen (11, 12) über abgesetzte Abschnitte (14) so ausgebildet sind, daß die Verbindungsstücke (15) mit den vorstehenden Teilen (8, 9) an den äußeren Umfängen der oberen Wand (2) und der unteren Wand (3) verbunden sind.

5. Schaltanlagegerüst nach Anspruch 4, gekennzeichnet durch Löcher (24) an den Stirnplatten (16, 17) zum Einpassen einer Tür (112) an der Frontfläche des Schaltanlagegerüsts und einer Rückplatte auf der der Tür (112) gegenüberliegenden Seite.

6. Schaltanlagegerüst nach Anspruch 4, gekennzeichnet durch Löcher (25) an den Flächen der Seitenflächensäulen (11, 12) für das Verbinden einer Vielzahl von Schaltanlagegerüsten oder zum Einpassen einer Abdeckplatte auf der der Seitenwand (13) gegenüberliegenden Oberfläche.

7. Schaltanlagegerüst nach einem der Ansprüche 1 bis 6, gekennzeichnet durch einen Zwischenträger (101) mit einer Trennwandplatte und einem Gerüstelement, der im wesentlichen in der Mitte zwischen den Seitenflächensäulen (11, 12) angeordnet ist.

8. Schaltanlagegerüst nach einem der Ansprüche 1 bis 7, dadurch gekennzeichnet, daß die Verbindungselemente (20) mit den vorstehenden Teilen (8, 9) verbunden und an Ort und Stelle durch Widerstandsschweißen befestigt sind.

**Revendications**

1. Bâti d'installation de distribution (1) comportant une paroi supérieure (2) possédant un élément (6) faisant saillie perpendiculairement à partir de cette paroi et du pourtour de cette dernière en direction de l'intérieur du bâti, une paroi inférieure (3) comportant un élément (7) faisant saillie perpendiculairement à ladite paroi et à partir du pourtour de cette dernière en direction de l'intérieur du bâti, une paroi latérale (13) comportant des plaques de façade (16, 17) faisant saillie perpendiculairement à partir de la paroi et à partir des bords latéraux de cette dernière en direction de l'intérieur du bâti, et deux montants à surfaces latérales (11, 12), caractérisé en ce que ladite paroi latérale (13) comporte des gorges découpées (18) et des organes de liaison (20) au niveau des parties d'extrémité supérieures et inférieures de plaques de façade (16, 17) et également des organes intermédiaires de liaison (22) et des gorges intermédiaires (23) situées au niveau de leurs bords supérieurs et inférieurs, les organes de liaison (22) interconnectant les éléments saillants voisins (6, 7) des parois supérieures et inférieures.

2. Bâti d'installation de distribution selon la revendication 1, caractérisé en ce que les éléments saillants (6, 7) comprennent chacun un ensemble d'organes (8, 9) qui sont perpendiculaires entre eux de manière à fournir des coins à angle droit (10) au niveau des parois supérieures et inférieures.

3. Bâti d'installation de distribution selon la revendication 1, caractérisé en ce que des organes de liaison (22) sont écartés de la surface de la paroi latérale (13) sur la largeur des gorges (23), dans lesquelles les éléments saillants (6, 7) s'engagent, et que lesdits organes de liaison (20) comportent des parties décalées (19), à l'aide desquelles les éléments saillants (6, 7) sont en contact avec les organes de liaison (20).

4. Bâti d'installation de distribution selon l'une quelconque des revendications 1 à 3, caractérisé par des montants à surfaces latérales (11, 12) réalisés sous la forme d'une lettre L en coupe transversale et disposés au niveau des coins avant et arrière (10) en vis-à-vis de la paroi de façade (16, 17) et ménagés sur les extrémités opposées de l'une desdites parois latérales (13), et des organes de liaison (15) ménagés dans les parties d'extrémité inférieure et supérieure des montants à surfaces latérales (11, 12) en y étant reliés par l'intermédiaire de parties décalées (14), de telle sorte que lesdits organes de liaison (15) sont raccordés aux éléments saillants (8, 9) ménagés sur les pourtours extérieurs de ladite paroi supérieure (2) et de ladite paroi inférieure (3).

5. Installation de distribution selon la revendication 4, caractérisée par des trous (24) ménagés dans lesdites plaques de façade (16, 17) pour le montage d'une porte (112) sur la surface avant dudit bâti de l'installation de distribution, et une plaque de fond située au niveau de la surface opposée à ladite porte (112).

6. Bâti d'installation de distribution selon la revendication 4, caractérisée par des trous (25) ménagés dans les surfaces desdits montants à surfaces latérales (11, 12) en vue du raccordement d'une pluralité desdits bâtis d'installations de distribution ou pour le montage d'une plaque de coude formant capot sur la surface opposée à la paroi latérale (13).

7. Bâti d'installation de distribution selon l'une quelconque des revendications 1 à 6, caractérisé par un support intermédiaire (101) incluant une plaque de séparation et un élément de bâti situé essentiellement à mi-chemin entre lesdits montants à surfaces latérales (11, 12).

8. Bâti d'installation de distribution selon l'une quelconque des revendications 1 à 7, caractérisé en ce que lesdits organes de raccordement (20) sont raccordés auxdits éléments saillants (8, 9) et sont fixés en place au moyen d'un soudage par résistance.

FIG. 1

FIG. 2

FIG. 3

F I G. 4

F I G. 5A

F I G. 5B

F I G. 6